# EUROPEAN PATENT SPECIFICATION

(11) **EP 3 476 816 B1**
(45) Date of publication and mention of the grant of the patent: **22.04.2020**
(21) Application number: 17834494.1
(22) Date of filing: 27.07.2017
(51) Int. Cl.: C04B 35/488, C01G 51/00, G04B 37/18, C04B 35/486, C04B 35/626, C04B 35/64, C04B 35/80

(54) **COLOR CERAMICS**
FARBKERAMIKEN
COULEURS CÉRAMIQUES

(30) Priority: 28.07.2016 JP 2016148603
(43) Date of publication of application: 01.05.2019
(73) Proprietor: Kyocera Corporation, Kyoto-shi Kyoto 612-8501 (JP)
(72) Inventor: TANI,Yoshito, Kyoto-shi Kyoto 612-8501 (JP)
(74) Representative: Viering, Jentschura & Partner mbB Patent- und Rechtsanwälte
(86) International application number: PCT/JP2017/027301
(87) International publication number: WO 2018/021492

(56) References cited:
- WO-A1-2009/119495
- WO-A1-2010/024275
- JP-A- S59 174 574
- JP-A- S63 185 855
- JP-A- 2004 059 374

## Description

### Technical Field

The present disclosure relates to a color ceramic.

### Background Art

Zirconia ceramics exhibit high mechanical characteristics, and produce a luxury feel and a feeling of aesthetic satisfaction. Therefore, in recent years, zirconia ceramics have been suitably used as decorative components such as bezels of watches, and keys and pillows of mobile phones. Moreover, various examinations regarding coloring components have been carried out in order to achieve various color tones in response to the diversification of preferences.

For example, in order to respond to the demand for zirconia ceramics that exhibit a black color tone, the applicant of the present application proposed a black ceramic containing a colorant for which the main component is cobalt oxide and a secondary component is iron oxide. (See patent document 1.)

### Citation List

### Patent Literature

Patent Document 1: JP 2008-133155 A

### Summary of Invention

In a color ceramic of the present disclosure, a content of zirconia with a stabilizer is 85 mass% or more. A content of alumina is 1 mass% or more and 4 mass% or less. A content of chromium in terms of Cr₂O₃ is 0.7 mass% or more and 3 mass% or less. A content of cobalt in terms of Co₃O₄ is 0.1 mass% or more and 0.5 mass% or less. The color ceramic includes zirconia crystals and first crystals that are composed of alumina crystals with solid-solution of the chromium.

### Description of Embodiment

Color tone preferences are diverse, and in recent years, there has been a demand for zirconia ceramics that exhibit a dark gray color tone for which, in the CIE 1976 L*a*b* color space, the lightness coordinate L* is 19 or more and 30 or less, the psychometric chroma coordinate a* is -8 or more to 3 or less, and the psychometric chroma coordinate b* is from -7 or more to 3 or less.

The color ceramic of the present disclosure exhibits a dark gray color tone for which the lightness coordinate L* is 19 or more and 30 or less, the psychometric chroma coordinate a* is from -8 or more and 3 or less, and the psychometric chroma coordinate b* is from -7 or more and 3 or less. The color ceramic of the present disclosure is described in detail below.

In a color ceramic of the present disclosure, a content of zirconia with a stabilizer is 85 mass% or more. A content of alumina is 1 mass% or more and 4 mass% or less. A content of chromium in terms of Cr₂O₃ is 0.7 mass% or more and 3 mass% or less, and a content of cobalt in terms of Co₃O₄ is 0.1 mass% or more and 0.5 mass% or less. The color ceramic of the present disclosure includes, as crystals, zirconia crystals, and first crystals that are composed of alumina crystals with solid-solution of the chromium.

In the color ceramic of the present disclosure, the content of alumina and the respective contents of chromium and cobalt in terms of values converted to oxides are within the abovementioned numeric ranges, and an oxide of chromium that has an action of darkening the color is not present singly, but rather is solid-solved in alumina crystals and present as first crystals, and thereby a dark gray color tone is exhibited. Here, a dark gray color tone is a color tone for which, in the CIE 1976 L*a*b* color space, the lightness coordinate L* is 19 or more and 30 or less, the psychometric chroma coordinate a* is -8 or more and 3 or less, and the psychometric chroma coordinate b* is -7 or more and 3 or less.

More specifically, when the content of alumina is increased, the psychometric chroma coordinate a* increases, the psychometric chroma coordinate b* decreases, and the lightness coordinate L* increases. Furthermore, when the content of chromium in terms of oxide is increased, the psychometric chroma coordinate a* decreases, the psychometric chroma coordinate b* increases, and the lightness coordinate L* decreases. Moreover, when the content of cobalt in terms of oxide is increased, the psychometric chroma coordinate a* decreases, the psychometric chroma coordinate b* decreases, and the lightness coordinate L* decreases. Here, when oxides of chromium are present singly, the lightness coordinate L* decreases. On the other hand, as with the color ceramic of the present disclosure, by making chromium present as first crystals that are composed of alumina crystals with solid-solution of the chromium, the decrease in the lightness coordinate L* can be suppressed, only the lightness coordinate L* can be set to a higher value than the psychometric chroma coordinates a* and b*, and a dark gray color tone can be realized.

Furthermore, with regard to the color tone of the color ceramic, the value of the lightness coordinate L*, and the values of the psychometric chroma coordinates a* and b* in the CIE 1976 L*a*b* color space may be determined according to JIS Z 8722-2000 using a spectrophotometric colorimeter (CM-700d or subsequent model available from Konica Minolta Inc.). Note that as the measurement conditions, a CIE standard light source D65 may be used as a light source, the illumination receiving mode may be set to a condition a ((45 - n) [45 - 0]), and the measurement diameter may be set to 3 mm. Moreover, the color tone of the color ceramic varies depending on the surface texture thereof, and therefore this measurement is performed on a surface for which the surface roughness has been adjusted to 0.1 µm or less by polishing the color ceramic with a diamond grindstone or the like.

Furthermore, a stabilizer is used to maintain the zirconia in a stable phase state (tetragonal crystal or cubic crystal). The stabilizer is at least one type selected from, for example, yttrium oxide (Y₂O₃), cerium oxide (CeO₂), dysprosium oxide (Dy₂O₃), magnesium oxide (MgO), and calcium oxide (CaO). In a case where the stabilizer is yttrium oxide in particular, the ionic radius thereof is close to that of zirconia, and thus the extent of stabilization is high, and therefore the color ceramic is superior in mechanical characteristics.

Here, with regard to the content amount of zirconia containing a stabilizer, first, using a fluorescent X-ray analysis device (XRF) to conduct a semi-quantitative analysis of the color ceramic, the zirconium (Zr) content is determined, and this zirconium is converted to zirconia (ZrO₂).

Next, with regard the content of stabilizer, similar to the zirconia, using the XRF device to conduct a semi-quantitative analysis of the color ceramic, and for example, when yttrium (Y) is detected, the content of stabilizer is calculated by converting the content of yttrium to the content in terms of yttrium oxide. Note that hafnium dioxide (HfO₂) is difficult to separate from zirconia, and therefore the content of hafnium dioxide is included in the content of zirconia that contains a stabilizer. The content of hafnium dioxide may be calculated by converting the content of hafnium (Hf), obtained through the XRF, to the content in terms of hafnium dioxide. Furthermore, by totaling the content amounts of the zirconia, stabilizer and hafnium dioxide calculated by the above-described methods, the content of zirconia that contains a stabilizer can be calculated.

Furthermore, the content of alumina, content of chromium in terms of oxide, and content of cobalt in terms of oxide may be calculated by the following method. First, similar to zirconia, using the XRF to conduct a semi-quantitative analysis of the color ceramic, the content amounts of aluminum (Al), chromium (Cr), and cobalt (Co) are determined. Next, the content amounts may be calculated by converting the content amounts of each of these components relative to the aluminum oxide (Al₂O₃), chromium oxide (Cr₂O₃), and cobalt oxide (Co₃O₄).

Moreover, the presence or absence of zirconia crystals and alumina crystals can be confirmed by measuring with use of an X-ray diffractometer (XRD), and then comparing the measurements with JCPDS data.

Furthermore, the presence or absence of first crystals that are composed of alumina crystals with solid-solution of the chromium may be confirmed through the following method. First, the color ceramic is cut, and a cross-section of the cut is mirror polished. Subsequently, the cross section is thermally treated at a temperature from 1360 to 1410°C for 10 to 20 minutes, and the thermally treated surface is used as a measurement surface. Next, this measurement surface is subjected to a surface analysis using an electron probe micro analyzer (EPMA). Furthermore, the presence or absence of first crystals can be confirmed according to whether chromium is detected in an area where oxygen and aluminum, which indicates the position where alumina crystals are present, overlap in an obtained color mapping. As another confirmation method, energy dispersive X-ray spectrometry (EDS) can be performed on alumina crystals of the measurement surface to confirm whether chromium is detected in the alumina crystals.

Furthermore, adjacent first crystals in the color ceramic of the present disclosure may have an average value of a distance between centroids that is 1.8 µm or more and 4.5 µm or less. Here, the average value of the distance between centroids is an average value of the shortest distance between centroids of adjacent first crystals. In other words, the average value of the distance between centroids is an index that indicates the extent of dispersion of the first crystals. Therefore, when such a satisfactory configuration is obtained, the first crystals are dispersed, and thus color variations are suppressed, hence a high level of aesthetic satisfaction can be imparted to consumers.

Note that color variations may be evaluated by the following method. First, the value of the lightness coordinate L* and the values of the psychometric chroma coordinates a* and b* are measured in the CIE 1976 L*a*b* color space at several locations of the cross-section of the color ceramic. Next, the obtained minimum L*, a*, and b* values are subtracted from the obtained maximum L*, a*, and b* values to thereby calculate ΔL, Δa, and Δb, and the color variation ΔE is obtained from ΔE = ((ΔL*)² + (Δa*)² + (Δb*)²)^{1/2}.

Here, the average value of the distance between centroids of adjacent first crystals can be calculated by the following method. First, after the measurement surface is obtained by the above-described method, the presence of first crystals is confirmed. Next, the first crystals are coated over in black in a photo of the measurement surface captured through SEM. Subsequently, the photo is read as image data, the image data is analyzed using a technique called the "distance between centroids method" of the image analysis software "Azo-kun" (trade name, Asahi Kasei Engineering Corporation), and the average value of the distance between centroids of the first crystals is calculated. Note that as the analysis conditions, for example, the lightness of particles may be set to "dark", the binarization method may be set to "manual", the small figure removal may be set to "0.01 µm", and the threshold value may be set to "180".

The color ceramic of the present disclosure may contain second crystals that are composed of zirconia crystals with solid-solution of titanium, and the titanium content in terms of oxide may be mass% or more and 4 mass% or less. When such a satisfactory configuration is obtained, a lattice constant a of the second crystals becomes 3.604 Å or less, a lattice constant c becomes 5.182 Å or less, color variation is further suppressed, and a high level of aesthetic satisfaction can be imparted to consumers.

Here, the presence or absence of second crystals that are composed of zirconia crystals with solid-solution of the titanium may be confirmed through the following method. First, after the measurement surface is obtained by the above-described method, surface analysis of the measurement surface is performed by the EPMA. Furthermore, the presence or absence of second crystals can be confirmed according to whether titanium is detected in an area where oxygen and zirconium, which indicates the position where zirconia crystals are present, overlap in an obtained color mapping. As another confirmation method, EDS can be performed on zirconia crystals of the measurement surface to confirm whether titanium is detected in the zirconia crystals.

The titanium content in terms of oxide may be calculated by using the XRF to conduct a semi-quantitative analysis of the color ceramic, thereby determining the content of titanium (Ti), and then converting this titanium to titanium dioxide (TiO₂).

In addition, the values of the lattice constant a and the lattice constant c of the second crystals may be calculated by performing measurements through the XRD to carry out a Rietveld analysis.

The color ceramic of the present disclosure may also be a ceramic in which a percentage of the number of the zirconia crystals having a grain size of 1 µm or more in terms of an equivalent circle diameter is 15% or more and 38% or less. When such a satisfactory configuration is obtained, zirconia crystals having a grain size of 1 µm or more in terms of an equivalent circle diameter are moderately present, and thereby color variations are suppressed, and workability is improved. Note that the equivalent circle diameter means the diameter of a circle for a case of replacement with a circle having an equivalent surface area of the zirconia crystal.

Furthermore, the percentage of the number of zirconia crystals having a grain size of 1 µm or more in terms of an equivalent circle diameter can be calculated using the following method. First, after the measurement surface has been obtained by the above-described method, the contours of the zirconia crystals in the photo of the measurement surface captured through SEM are outlined in black. Next, the percentage of the number of zirconia crystals having a grain size of 1 µm or more in terms of an equivalent circle diameter may be calculated using the particle analysis technique of the image analysis software "Azo-kun" with use of the photo for which the contours were outlined. Note that the abovementioned percentage is a value expressed as a percentage using the total number of counted zirconia crystals as the denominator and the number of zirconia crystals having a grain size of 1 µm or greater in terms of an equivalent circle diameter as the numerator. As the analysis conditions, for example, the lightness of particles may be set to "light", the binarization method may be set to "manual", the small figure removal may be set to "0.05" µm, and the threshold value may be set to "220".

Note that the average value of the equivalent circle diameters of the zirconia crystals is, for example, 0.5 µm or more and 1.0 µm or less.

Furthermore, the average crystal grain size D of the first crystals in the color ceramic of the present disclosure may be 0.4 µm or more and 0.8 µm or less. When such a satisfactory configuration is obtained, color variations are suppressed, and workability is improved by the first crystals.

Here, the average crystal grain size D of the first crystals can be calculated by the following method. First, after the measurement surface is obtained by the above-described method, the presence of first crystals is confirmed. Next, the first crystals are coated over in black in a photo of the measurement surface captured through SEM. Subsequently, the photo is read as image data, the image data is analyzed using the particle analysis technique of the image analysis software "Azo-kun" (trade name, Asahi Kasei Engineering Corporation), and the average crystal grain size D of the first crystals is calculated. Note that as the analysis conditions, for example, the lightness of particles may be set to "dark", the binarization method may be set to "manual", the small figure removal may be set to "0.01 µm", and the threshold value may be set to "180".

Furthermore, with respect to the color ceramic of the present disclosure, a ratio Dσ/D of a standard deviation Dσ of the crystal grain size of the first crystals to the average crystal grain size D of the first crystals may be 0.7 or less. When such a satisfactory configuration is obtained, the crystal grain size of the first crystals becomes more uniform, and thereby color variations are further suppressed. Note that the standard deviation Dσ of the crystal grain size of the first crystals is, for example, 0.4 µm or less.

Here, similar to when the average crystal grain size D of the first crystals is determined, the standard deviation Dσ of the crystal grain size of the first crystals may be calculated using the particle analysis technique of the image analysis software "Azo-kun".

Furthermore, the color ceramic of the present disclosure exhibits a dark gray color tone. Therefore, the color ceramic of the present disclosure can be suitably used as components for watches such as a bezel or band piece; components for mobile phones such as exteriors and various keys and pillows that are press-operated; components for fishing line guides such as fishing line guide rings; components for personal accessories such as brooches, necklaces, earrings, rings, necktie pins, tie tacks, medals, and buttons; components for construction materials such as door handles and decorative tiles for floors, walls, and ceilings; components for kitchen utensils such as spoons and forks; decorative components for other consumer electronics; and components for vehicles such as emblems.

Next, an example of a method for manufacturing the color ceramic of the present disclosure is described.

First, stabilized zirconia powder with an average grain size of 0.25 µm or more and 0.55 µm or less is prepared. Here, the stabilized zirconia powder is powder containing from 90 to 99 mol% of zirconia and from 1 to 10 mol% of a stabilizer, the powder being produced by a coprecipitation method with the addition of at least one type of stabilizer selected from stabilizers such as yttrium oxide, cerium oxide, dysprosium oxide, magnesium oxide, and calcium oxide. Note that this stabilized zirconia powder may contain around 2 mass% of hafnium dioxide.

Next, alumina powder having an average grain size of 0.2 µm or more and 0.6 µm or less, chromium oxide powder having an average grain size of 0.3 µm or more and 1.0 µm or less, and cobalt oxide powder having an average grain size of 0.3 µm or more and 1.0 µm or less are prepared. Raw material powder is then compounded by weighing stabilized zirconia powder, alumina powder, chromium oxide powder, and cobalt oxide powder so that in the color ceramic, the content of zirconia containing a stabilizer is 85 mass% or more, the content of alumina is 1 mass% or more and 4 mass% or less, the content of chromium in terms of oxide is 0.7 mass% or more and 3 mass% or less, and the content of cobalt in terms of oxide is 0.1 mass% or more and 0.5 mass% or less.

Next, the raw material powder and water as a solvent are put into a vibrating mill or ball mill or the like, and mixed and ground to obtain a slurry. Here, in order to set the average value of the distance between centroids of the first crystals that are composed of alumina crystals with solid-solution of the chromium, to a range from 1.8 µm to 4.5 µm, a dispersing agent may be added in a range from 0.2 parts by mass to 0.5 parts by mass per 100 parts by mass of the raw material powder, when mixing and grinding.

Next, granulated granules are obtained by adding a prescribed amount of polyvinyl alcohol as a binder to the slurry, and implement spraying and drying by using a spray-drying apparatus. These granules are then molded into a desired shape, such as a round plate, flat plate, cylindrical body, or annular body using a desired molding method, such as dry pressing and cold isostatic pressing, and a compact of the desired shape is obtained. Furthermore, a solvent and a binder, etc. may be added to the slurry, which can then be molded using cast molding or injection molding to obtain a compact with a complex shape.

Next, after the obtained compact is degreased as necessary, it is maintained for two hours or longer at a specific temperature of a temperature range from 1000°C to 1300°C in an air atmosphere. By maintaining the compact for two hours or longer at a specific temperature of a temperature range from 1000°C to 1300°C in this manner, the chromium can be solid-solved in the alumina crystals. Furthermore, the color ceramic of the present disclosure can then be obtained by firing in a temperature range from 1450°C to 1540°C.

In order to obtain a color ceramic which includes second crystals that are composed of zirconia crystals with solid-solution of the titanium and in which the content of titanium in terms of oxide is from 1 wt.% to 4 wt.%, titanium dioxide powder having an average grain size of 0.2 µm or more and 0.6 µm or less may be added so that the titanium content in terms of oxide in the color ceramic is 1 wt.% or more and 4 wt.% or less when the raw material powder is compounded. Furthermore, by maintaining for two hours or longer at a specific temperature of a temperature range from 1000°C to 1300°C, the titanium can be solid-solved in the zirconia crystals.

To obtain the percentage of the number of the zirconia crystals having a grain size of 1 µm or more in terms of an equivalent circle diameter at 15% or more and 38% or less, firing in the above-described temperature range from 1450°C to 1540°C may be performed for 1 or longer and 3 or less hours.

In addition, the average grain size of the alumina powder that is used, the time for mixing and grinding the raw material powder, and the firing temperature may be adjusted in order to obtain the average crystal grain size D of the first crystals ranging from 0.4 µm to 0.8 µm, and the ratio Dσ/D with the standard deviation Dσ of the crystal grain size of the first crystals at 0.7 or less.

Hereinafter, examples of the present disclosure will be described. However, the present disclosure is not limited to these examples.

### Example 1

First, stabilized zirconia powder having an average grain size of 0.35 µm and containing 3 mol% of yttrium oxide as a stabilizer was prepared. Next, alumina powder having an average grain size of 0.4 µm, chromium oxide powder having an average grain size of 0.5 µm, and cobalt oxide powder having an average grain size of 0.8 µm were prepared.

Next, raw material powder was compounded by weighing the stabilized zirconia powder, the alumina powder, the chromium oxide powder, and the cobalt oxide powder so that the content amounts of respective constituents became the values shown in Table 1 for each of the samples.

Next, the raw material powder, water as a solvent, and a dispersing agent of an amount of 0.1 parts by mass per 100 parts by mass of the raw material powder were put into a vibrating mill, and mixed and ground for 30 hours to obtain a slurry.

Next, granulated granules were obtained by adding a prescribed amount of polyvinyl alcohol as a binder to the slurry, and implementing spraying and drying by using a spray-drying apparatus. These granules were then used to obtain a compact through dry pressing.

Next, the compact was degreased and then maintained in the air atmosphere at a temperature of 1200°C for 2 hours, after which the compact was fired for 2 hours at a temperature of 1540°C, and thereby each sample was obtained. Also, each sample was formed in a cylindrical tablet shape having a diameter of 17 mm and a thickness of 3 mm.

Next, the presence or absence of first crystals for which chromium was solid-solved in alumina crystals was confirmed for each sample. First, each sample was cut, and the cross section of the cut was mirror polished, and then heat treated at 1410°C for 10 minutes, and then a surface analysis by the EPMA was conducted using the thermally treated surface as the measurement surface. Furthermore, the presence or absence of first crystals was confirmed according to whether chromium was detected in an area where oxygen and aluminum, which indicates the position where alumina crystals are present, overlapped in an obtained color mapping. As a result, it was confirmed that first crystals were present in samples other than Sample No. 1.

Next, the value of the lightness coordinate L*, and the values of the psychometric chroma coordinates a* and b* in the CIE 1976 L*a*b* color space were determined according to JIS Z 8722-2000 using a spectrophotometric colorimeter (CM-700d available from Konica Minolta Inc.). Note that as the measurement conditions, a CIE standard light source D65 was used as the light source, the illumination receiving mode was set to condition a ((45 - n) [45 - 0]), and the measurement diameter was set to 3 mm. Moreover, the measurements were performed on a surface for which the surface roughness had been adjusted to 0.1 µm or less by polishing each sample with a diamond grindstone. The results are shown in Table 1.

**[Table 1]**

| Sample No. | ZrO₂ (mass%) | Al₂O₃ (mass%) | Cr₂O₃ (mass%) | Co₃O₄ (mass%) | L* | a* | b* |
|---|---|---|---|---|---|---|---|
| 1 | 98.5 | 0 | 1.2 | 0.3 | 18 | -11 | 2 |
| 2 | 97.5 | 1 | 1.2 | 0.3 | 25 | -8 | -3 |
| 3 | 96.5 | 2 | 1.2 | 0.3 | 26 | -5 | -4 |
| 4 | 95.5 | 3 | 1.2 | 0.3 | 27 | -2 | -5 |
| 5 | 94.5 | 4 | 1.2 | 0.3 | 28 | 2 | -6 |
| 6 | 93.5 | 5 | 1.2 | 0.3 | 29 | 5 | -7 |
| 7 | 96.2 | 3 | 0.5 | 0.3 | 30 | 0 | -8 |
| 8 | 96.0 | 3 | 0.7 | 0.3 | 29 | -1 | -6 |
| 9 | 95.7 | 3 | 1.0 | 0.3 | 28 | -1 | -5 |
| 10 | 94.7 | 3 | 2.0 | 0.3 | 25 | -4 | -3 |
| 11 | 93.7 | 3 | 3.0 | 0.3 | 22 | -6 | 1 |
| 12 | 92.7 | 3 | 4.0 | 0.3 | 19 | -9 | 5 |
| 13 | 95.8 | 3 | 1.2 | 0 | 35 | 5 | 4 |
| 14 | 95.7 | 3 | 1.2 | 0.1 | 30 | 2 | 3 |
| 15 | 95.65 | 3 | 1.2 | 0.15 | 30 | 2 | 2 |
| 16 | 95.6 | 3 | 1.2 | 0.2 | 28 | -1 | -1 |
| 17 | 95.4 | 3 | 1.2 | 0.4 | 21 | -2 | -5 |
| 18 | 95.3 | 3 | 1.2 | 0.5 | 19 | -3 | -7 |
| 19 | 95.2 | 3 | 1.2 | 0.6 | 17 | -4 | -9 |

From the results shown in Table 1, it is clear that Samples No. 2 to 5, 8 to 11, and 14 to 18, which had a content of alumina of 1 mass% or more and 4 mass% or less, a content of chromium in terms of oxide of 0.7 mass% of more and 3 mass% or less, and a content of cobalt in terms of oxide of 0.1 mass% or more and 0.5 mass% or less, and contained first crystals that are composed of alumina crystals with solid-solution of chromium, exhibited a dark gray color tone.

### Example 2

Next, samples each having the different average value of the distance between centroids of adjacent first crystals were produced, and the color variation ΔE was evaluated.

Note that Samples No. 20 to 24 were produced using the same production method as that of Sample No. 4 of Example 1 with the exception that the addition amount of the dispersing agent was changed to the values shown in Table 2. Also note that Sample No. 20 is the same sample as Sample No. 4 of Example 1.

The average value of the distance between centroids of adjacent first crystals of each sample was calculated by the following method. First, the method for confirming the presence of first crystals of Example 1 was implemented. Next, the first crystals were coated over in black in a photo of a measurement surface captured through SEM (observation magnification: 10000 times, observation range: 12 µm × 9.6 µm). Next, the photo was read as image data, the image data was analyzed using a technique called the "distance between centroids method" of the image analysis software "Azo-kun", and the average value of the distance between centroids of the first crystals was calculated. Note that as the analysis conditions, the lightness of particles was set to "dark", the binarization method was set to "manual", the small figure removal was set to "0.01 µm", and the threshold value was set to "180".

In addition, the color variation of each sample was measured at five locations on the surface of each sample, the L*, a*, and b* values in the CIE 1976 L*a*b* color space were measured, the obtained minimum L*, a*, and b* values were subtracted from the obtained maximum L*, a*, and b* values to thereby calculate ΔL, Δa, and Δb, and the color variation ΔE was determined from ΔE = ((ΔL*)² + (Δa*)² + (Δb*)²)^{1/2}. The results are shown in Table 2.

**[Table 2]**

| Sample No. | Dispersing Agent (parts by mass) | Average Value of Distance Between Centroids (µm) | ΔE |
|---|---|---|---|
| 20 | 0.1 | 4.7 | 1.5 |
| 21 | 0.2 | 4.5 | 1.2 |
| 22 | 0.3 | 3.1 | 1.1 |
| 23 | 0.4 | 2.0 | 1.0 |
| 24 | 0.5 | 1.8 | 1.0 |

From the results shown in Table 2, the color variation ΔE of Samples No. 21 to 24 was 1.2 or less. From this, it was understood that color variation is suppressed when the average value of the distance between centroids of adjacent first crystals is 1.8 µm or more and 4.5 µm or less.

### Example 3

Next, samples each having different titanium content in terms of oxide and containing second crystals, for which titanium was solid-solved in zirconia crystals, were produced, and the color variation ΔE was evaluated.

Note that the method for producing Samples No. 25 to 30 was the same as the production method used for Sample No. 22 of Example 2 with the exception that the raw material powder was compounded by weighing titanium dioxide powder having an average grain size of 0.25 µm such that the titanium content in each sample became the value shown in Table 3. Note that Sample No. 25 is the same sample as Sample No. 22 of Example 2.

Next, the presence or absence of second crystals that are composed of zirconia crystals with solid-solution of titanium was confirmed for each sample. First, each sample was cut, and the cross section of the cut was mirror polished. Next, the mirror polished cross-section was thermally treated at 1410°C for 10 minutes, and then a surface analysis by the EPMA was conducted using the thermally treated surface as the measurement surface. Furthermore, the presence or absence of second crystals was confirmed according to whether titanium was detected in an area where oxygen and zirconium, which indicates the position where zirconia crystals are present, overlapped in an obtained color mapping. As a result, it was confirmed that second crystals were present in Samples No. 26 to 30.

The color variation ΔE of each sample was also determined with the same method as that of Example 2. The results are shown in Table 3.

**[Table 3]**

| Sample No. | TiO₂ (mass%) | Lattice Constant (Å) | | ΔE |
|---|---|---|---|---|
| | | a | c | |
| 25 | 0 | 3.606 | 5.183 | 1.1 |
| 26 | 1 | 3.605 | 5.182 | 0.9 |
| 27 | 2 | 3.604 | 5.182 | 0.7 |
| 28 | 3 | 3.602 | 5.181 | 0.6 |
| 29 | 4 | 3.601 | 5.181 | 0.5 |
| 30 | 5 | 3.600 | 5.181 | 1.1 |

From the results shown in Table 3, the color variation ΔE of Samples No. 26 to 29 was 0.9 or less. From this, it was found that the color variation is further suppressed when second crystals that are composed of zirconia crystals with solid-solution of titanium are present, and the content titanium in terms of oxide is 1 mass% or more and 4 mass% or less.

### Example 4

Next, samples each having different percentage of the number of zirconia crystals having a grain size of 1 µm or more in terms of an equivalent circle diameter were produced, and the color variation ΔE and workability were evaluated.

Note that Samples No. 31 to 35 were produced using the same production method as that of Sample No. 28 of Example 3 with the exception that the firing was performed at a temperature of 1540°C for the time shown in Table 4. Note that Sample No. 33 is the same sample as Sample No. 28 of Example 3.

Furthermore, the percentage of the number of zirconia crystals having a grain size of 1 µm or more in terms of an equivalent circle diameter was calculated for each sample using the following method. First, the contours of the zirconia crystals in the photo of a measurement surface captured through SEM (observation magnification: 10000 times, observation range: 12 µm × 9.6 µm) were outlined in black. Next, the percentage of the number of zirconia crystals having a grain size of 1 µm or more in terms of an equivalent circle diameter was calculated using the photo for which the contours were outlined, and using the particle analysis technique of the image analysis software "Azo-kun". Note that as the analysis conditions, the lightness of particles was set to "light", the binarization method was set to "manual", the small figure removal was set to "0.05 µm", and the threshold value was set to "220".

Next, the workability of each sample was evaluated using the following method. First, a flat surface grinder (SGE-515E2T, available from Nagase Integrex Co., Ltd.) equipped with a wheel (SCD400N75B25-5, available from Asahi Diamond Industrial Co., Ltd.) was prepared. This flat surface grinder was then used under processing conditions including a rotation speed of 2000 min⁻¹, an incision amount of 0.005 mm/pass, and a grinding amount of 1200 V (mm³), and the grinding resistance after 200 passes was measured using a stationary dynamometer (9257B, available from Kistler Group). Each of the samples was then ranked in order from the lowest grinding resistance. More specifically, the sample with a ranking of "1" had the lowest grinding resistance, and the sample with a ranking of "5" had the highest grinding resistance.

The color variation ΔE of each sample was also determined with the same method as that of Example 2. The results are shown in Table 4.

**[Table 4]**

| Sample No. | Hold Time (h) | Number Percentage (%) | ΔE | Workability Ranking |
|---|---|---|---|---|
| 31 | 0.5 | 13 | 0.2 | 5 |
| 32 | 1.0 | 15 | 0.3 | 4 |
| 33 | 2.0 | 28 | 0.6 | 3 |
| 34 | 3.0 | 38 | 0.7 | 2 |
| 35 | 5.0 | 40 | 1.0 | 1 |

From the results shown in Table 4, it was found that also amongst Samples No. 31 to 35, the Samples No. 32 to 34, for which the percentage of the number of the zirconia crystals having a grain size of 1 µm or more in terms of an equivalent circle diameter was 15% or more and 38% or less, were superior in both the color variation ΔE and workability.

### Example 5

Next, samples each having the different average crystal grain size D of the first crystals and different standard deviation Dσ of the crystal grain size of the first crystals were produced, and the color variation ΔE and workability were evaluated.

Note that Samples 36 to 42 were produced with the same production method as that of Sample No. 34 of Example 4 with the exception that the raw material powders were mixed and ground with a vibrating mill for the amount of time shown in Table 5, and then fired at the temperature shown in Table 5. Note that Sample No. 36 is the same sample as Sample No. 34 of Example 4.

Next, the average crystal grain size D of the first crystals of each sample was calculated by the following method. First, the method for confirming the presence of first crystals of Example 1 was implemented. Next, the first crystals were coated over in black in a photo of a measurement surface captured through SEM (observation magnification: 10000 times, observation range: 12 µm × 9.6 µm). Subsequently, the photo was read as image data, the image data was analyzed using the particle analysis technique of the image analysis software "Azo-kun" (trade name, Asahi Kasei Engineering Corporation), and the average crystal grain size D of the first crystals was calculated. Note that as the analysis conditions, the lightness of particles was set to "dark", the binarization method was set to "manual", the small figure removal was set to "0.01 µm", and the threshold value was set to "180".

Furthermore, similar to the above-described method used to determine the average crystal grain size D of the first crystals, the standard deviation Dσ of the crystal grain size of the first crystals of each sample was calculated using the particle analysis technique of the image analysis software "Azo-kun".

Next, the workability of each sample was evaluated using the same method as that of Example 4. The color variation ΔE of each sample was also determined with the same method as that of Example 2. The results are shown in Table 5.

**[Table 5]**

| Sample No. | Grinding Time (H) | Firing Temperature (°C) | Average Crystal Grain Size of First Crystals (µ/m) | Standard Deviation σ/D of Crystal Grain Size of First Crystals (µ/m) | σ/D | ΔE | Workability Ranking |
|---|---|---|---|---|---|---|---|
| 36 | 30 | 1540 | 0.90 | 0.61 | 0.68 | 0.7 | 1 |
| 37 | 40 | 1520 | 0.80 | 0.57 | 0.71 | 0.6 | 2 |
| 38 | 50 | 1510 | 0.70 | 0.49 | 0.70 | 0.4 | 3 |
| 39 | 60 | 1500 | 0.64 | 0.42 | 0.66 | 0.4 | 4 |
| 40 | 70 | 1490 | 0.59 | 0.27 | 0.46 | 0.3 | 5 |
| 41 | 80 | 1470 | 0.40 | 0.25 | 0.63 | 0.3 | 6 |
| 42 | 90 | 1450 | 0.30 | 0.20 | 0.67 | 0.2 | 7 |

From the results shown in Table 5, it was found that also amongst Samples No. 36 to 42, the Samples No. 37 to 41, for which the average crystal grain size D of the first crystals was 0.4 µm or more and 0.8 µm or less, were superior in both the color variation ΔE and workability.

It was also found that also amongst Samples No. 37 to 41, the Samples No. 38 to 41 for which the ratio Dσ/D was 0.7 or less were superior particularly in the color variation ΔE.

## Claims

1. A color ceramic comprising:
zirconia with a stabilizer, having a content of 85 mass% or more;
alumina having a content of 1 mass% or more and 4 mass% or less;
chromium having a content, in terms of Cr₂O₃, of 0.7 mass% or more and 3 mass% or less; and
cobalt having a content, in terms of Co₃O₄, of 0.1 mass% or more and 0.5 mass% or less,
wherein the color ceramic includes:
zirconia crystals; and
first crystals composed of alumina crystals with solid-solution of the chromium.

2. The color ceramic according to claim 1, wherein an average value of a distance between centroids of adjacent first crystals is 1.8 µm or more and 4.5 µm or less.

3. The color ceramic according to claim 1 or 2, further comprising titanium having a content, in terms of TiO₂, of 1 mass% or more and 4 mass% or less,
wherein the color ceramic further includes second crystals composed of zirconia crystals with solid-solution of the titanium.

4. The color ceramic according to any one of claims 1 to 3, wherein a percentage of a number of the zirconia crystals having a grain size of 1 µm or more in terms of an equivalent circle diameter is 15% or more and 38% or less.

5. The color ceramic according to any one of claims 1 to 4, wherein an average crystal grain size D of the first crystals is 0.4 µm or more and 0.8 µm or less.

6. The color ceramic according to any one of claims 1 to 5, wherein a ratio Do/D of a standard deviation Do of the crystal grain size of the first crystals to an average crystal grain size D of the first crystals is 0.7 or less.

## Patentansprüche

1. Farbkeramik, aufweisend:
Zirkonoxid mit einem Stabilisator, mit einem Gehalt von 85 Masse-% oder mehr,
Aluminiumoxid mit einem Gehalt von 1 Masse-% oder mehr und 4 Masse-% oder weniger,
Chrom mit einem Gehalt, bezogen auf Cr₂O₃, von 0,7 Masse-% oder mehr und 3 Masse-% oder weniger, und
Kobalt mit einem Gehalt, bezogen auf Co₃O₄, von 0,1 Masse-% oder mehr und 0,5 Masse-% oder weniger,
wobei die Farbkeramik aufweist:
Zirkonoxidkristalle und
erste Kristalle, die aus Aluminiumoxidkristallen mit fester Lösung des Chroms zusammengesetzt sind.

2. Farbkeramik gemäß Anspruch 1, wobei ein Durchschnittswert einer Entfernung zwischen Schwerpunkten benachbarter erster Kristalle 1,8 µm oder mehr und 4,5 µm oder weniger beträgt.

3. Farbkeramik gemäß Anspruch 1 oder 2, ferner aufweisend Titan mit einem Gehalt, bezogen auf TiO₂, von 1 Masse-% oder mehr und 4 Masse-% oder weniger,
wobei die Farbkeramik ferner zweite Kristalle aufweist, die aus Zirkonoxidkristallen mit fester Lösung des Titans zusammengesetzt sind.

4. Farbkeramik gemäß irgendeinem der Ansprüche 1 bis 3, wobei ein Prozentsatz einer Anzahl der Zirkonoxidkristalle mit einer Korngröße von 1 µm oder mehr, bezogen auf einen äquivalenten Kreisdurchmesser, 15 % oder mehr und 38 % oder weniger beträgt.

5. Farbkeramik gemäß irgendeinem der Ansprüche 1 bis 4, wobei eine durchschnittliche Kristallkorngröße D der ersten Kristalle 0,4 µm oder mehr und 0,8 µm oder weniger beträgt.

6. Farbkeramik gemäß irgendeinem der Ansprüche 1 bis 5, wobei das Verhältnis Do/D einer Standardabweichung Dσ der Kristallkorngröße der ersten Kristalle zu einer durchschnittlichen Kristallkorngröße D der ersten Kristalle 0,7 oder weniger beträgt.

## Revendications

1. Une céramique de couleur, comprenant :
de la zircone avec un stabilisateur, ayant une teneur de 85 % en masse ou plus ;
de l'alumine ayant une teneur de 1 % en masse ou plus et de 4 % en masse ou moins ;
du chrome ayant une teneur, en termes de Cr₂O₃, de 0,7 % en masse ou plus et de 3 % en masse ou moins ; et
du cobalt ayant une teneur, en termes de CO₃O₄, de 0,1 % en masse ou plus et de 0,5 % en masse ou moins,
dans laquelle la céramique de couleur comprend :
des cristaux de zircone ; et
premiers cristaux composés de cristaux d'alumine avec une solution solide du chrome.

2. La céramique de couleur selon la revendication 1, dans laquelle une valeur moyenne d'une distance entre les centroïdes de premiers cristaux adjacents est de 1,8 µm ou plus et de 4,5 µm ou moins.

3. La céramique de couleur selon la revendication 1 ou 2, comprenant en outre du titane ayant une teneur, en termes de TiO₂, de 1 % en masse ou plus et de 4 % en masse ou moins,
dans laquelle la céramique de couleur comprend en outre deuxièmes cristaux composés de cristaux de zircone avec une solution solide du titane.

4. La céramique de couleur selon l'une quelconque des revendications 1 à 3, dans laquelle un pourcentage d'un nombre de cristaux de zircone ayant une taille de grain de 1 µm ou plus en termes de diamètre de cercle équivalent est de 15 % ou plus et de 38 % ou moins.

5. Céramique de couleur selon l'une quelconque des revendications 1 à 4, dans laquelle une taille moyenne D des premiers cristaux est de 0,4 µm ou plus et de 0,8 µm ou moins.

6. La céramique de couleur selon l'une quelconque des revendications 1 à 5, dans laquelle un rapport Do/D d'un écart type Do de la taille de grain des premiers cristaux sur une taille moyenne de grain D des premiers cristaux est de 0,7 ou moins.
